# EUROPEAN PATENT SPECIFICATION

(11) **EP 1 352 461 B1**
(45) Date of publication and mention of the grant of the patent: **14.03.2007**
(21) Application number: 02716316.1
(22) Date of filing: 18.01.2002
(51) Int. Cl.: H02K 5/128, F04D 13/06

(54) **CANNED MOTOR AND CANNED MOTOR PUMP**
SPALTTOPFMOTOR und -PUMPE
MOTEUR A GAINE ET POMPE A MOTEUR A GAINE

(30) Priority: 19.01.2001 JP 2001011778
(43) Date of publication of application: 15.10.2003
(73) Proprietor: EBARA CORPORATION, Ohta-ku, Tokyo 144-8510 (JP)
(72) Inventor: MIYAZAKI, Yoshiaki, c/o Ebara Corporation, Tokyo 144-8510 (JP); UCHIDA, Hiroshi, c/o Ebara Corporation, Tokyo 144-8510 (JP); KAJIWARA, Kenichi, c/o Ebara Corporation, Tokyo 144-8510 (JP); MATAKE, Kozo, c/o Ebara Densan Ltd., Tokyo 144-8575 (JP); KURITA, Kaname, c/o Ebara Densan Ltd., Tokyo 144-8575 (JP)
(74) Representative: Wagner, Karl H.
(86) International application number: PCT/JP2002/000310
(87) International publication number: WO 2002/058213

(56) References cited:
- DE-A- 2 048 467
- DE-A- 3 609 311
- DE-A- 4 208 829
- DE-C- 3 931 665
- DE-C- 19 934 819
- FR-A- 2 075 332
- GB-A- 1 180 598

## Description

### Technical Field

The present invention relates to a canned motor and a canned motor pump, and more particularly to a canned motor which can be manufactured more easily to lower a manufacturing cost, and a canned motor pump having such canned motor.

### Background Art

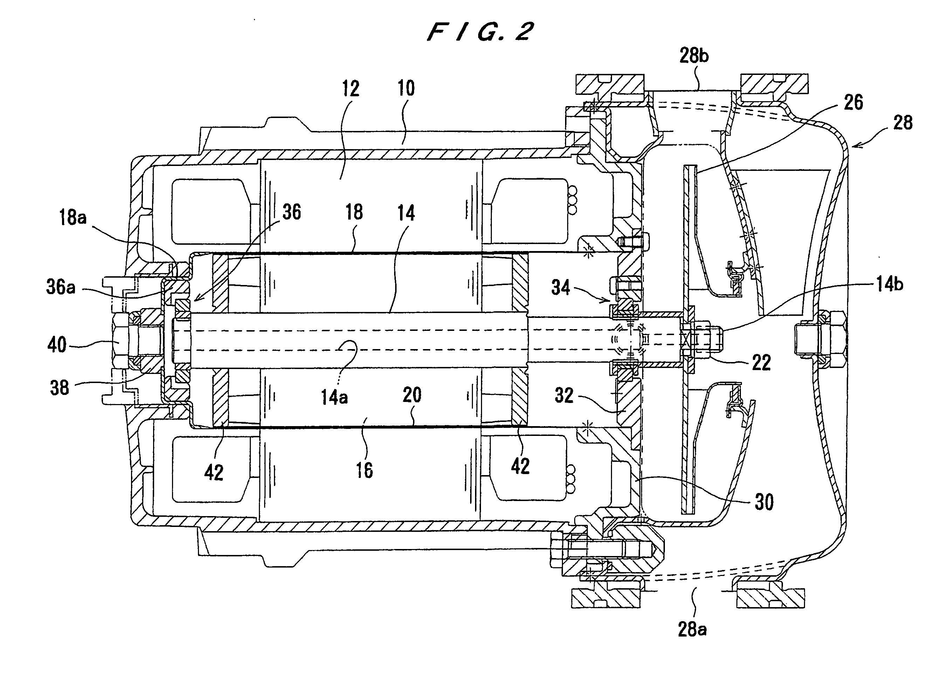

FIG. 2 shows a conventional canned motor pump which has a typical structure and incorporates a canned motor therein. As shown in FIG. 2, a canned motor pump incorporates a canned motor which comprises a stator 12 housed in a motor frame 10 and a rotor 16 fixed to a main shaft 14. A substantially cylindrical stator can 18 is provided so as to surround an inner circumferential surface of the stator 12 hermetically, and a substantially cylindrical rotor can 20 is provided so as to surround an outer circumferential surface of the rotor 16 hermetically.

A through-hole 14a is formed axially in the central portion of the main shaft 14, and a projection 14b is formed so as to extend axially from one end of the main shaft 14. The projection 14b has a male screw on its outer circumferential surface, and allows an impeller to be attached thereto. Specifically, an impeller 26 is mounted on the projection 14b onto which a nut 22 is screwed, thereby fixing the impeller 26 to the projection 14b. The impeller 26 is housed in a pump casing 28 which is formed, in this embodiment, by assembling pressed products manufactured by press-forming of sheet metal such as stainless steel plate, and has a suction port 28a and a discharge port 28b. The pump casing composed of the pressed products is referred to as a pressed pump casing.

A bracket 30 is disposed between the motor frame 10 and the pressed pump casing 28, and the main shaft 14 is rotatably supported by a bearing 34 held by a bearing bracket 32 attached to the bracket 30, and a bearing 36 provided at the opposite side of the impeller 26.

With the above structure, when the main shaft 14 and the impeller 26 are integrally rotated by the rotation of the rotor 16, a liquid to be handled by the pump is drawn from the suction port 28a into the pressed pump casing 28, and then is pressurized by the impeller 26 and discharged from the discharge port 28b to the outside of the pump. At the same time, the pressurized liquid discharged from the impeller 26 flows through a gap between the stator can 18 and the rotor can 20 to cool the motor, and is then returned to the suction side of the pump through the through-hole 14a of the main shaft 14.

The through-hole 14a is formed in the main shaft 14 by drilling a solid round bar using a drill or the like, and then the outer circumferential surface of the main shaft 14 is processed by a certain work, thus producing the main shaft 14 having a desired shape. The stator can 18 is processed by deep-drawing into a cylindrical receptacle shape such that the stator can 18 has a smaller-diameter portion 18a at one end thereof and an open end at the other end thereof. The smaller-diameter portion 18a of the stator can 18 is fixedly held between the inner circumferential surface of the motor frame 10 and an outer ring 36a of the bearing 36, and the other open end of the stator can 18 is fixed to the inner circumferential surface of the bracket 30 by welding. Further, the smaller-diameter portion 18a of the stator can 18 has an opening into which a plug 38 is fitted, and a bolt 40 is screwed into the plug 38, thus blocking up the opening of the smaller-diameter portion 18a. The rotor can 20 has both open ends to which a pair of rotor side plates 42 are fixed by welding, respectively. Each of the rotor side plates 42 is fixed to the outer circumferential surface of the main shaft 14 by welding.

However, in the conventional canned motor, the main shaft is formed by drilling a solid round bar using a drill or the like because the main shaft is required to provide the portion having a sufficient rigidity to which an inner ring of the bearing is attached, and the portion to which the impeller is attached. Generally, the main shaft is considerably long, and hence the drilling process is difficult and much man-hour for such drilling process is necessary. The working efficiency of welding is generally low to cause an increase in the manufacturing cost. Therefore, there has been a strong demand for reducing the number of welding processes in fixing the stator can and the rotor can and for performing the welding processes so as to ensure a highly hermetical condition.

Further attention is drawn to document FR 2 075 332 which discloses a canned motor, as set out in the preamble of claim 1, with a rotor shaft in the form of a hollow pipe.

Furthermore attention is drawn to the document DE 36 09 311A which also discloses a canned motor with a rotor shaft in the form of a hollow pipe.

In accordance with the present invention a canned motor, as set forth in claim 1, is provided. Preferred embodiments of the invention are disclosed in the dependent claim.

### Disclosure of Invention

The present invention has been made in view of the above, and it is therefore an object of the present invention to provide a canned motor which can be manufactured more easily to lower a manufacturing cost without deteriorating its performance, and a canned motor pump having such canned motor.

In order to achieve the above object, according to a first aspect of the present invention, there is provide a canned motor comprising: a stator; a rotor provided in the stator; and a main shaft for supporting the rotor, the main shaft comprising: a hollow pipe; and plug members fitted into both ends of the hollow pipe, the plug members having respective through-holes.

According to the present invention, because the main shaft comprises a commercial hollow pipe which is additionally machined by boring or the like, it is not necessary to drill the main shaft using a drill or the like. Therefore, the manufacturing process is facilitated, and the man-hour required for working is reduced. Further, the plug member allows the hollow main shaft to be sufficiently rigid and allows the impeller to be attached to the hollow main shaft.

According to an aspect of the present invention, there is provided a canned motor pump comprising: a canned motor according to claim 1 ; a pump casing connected to one end of the canned motor; and an impeller housed in the pump casing and supported by the main shaft of the canned motor.

### Brief Description of Drawings

FIG. 1 is a cross-sectional view showing a canned motor pump which incorporates a canned motor according to an embodiment of the present invention; and
FIG. 2 is a cross-sectional view showing a conventional canned motor pump.

### Best Mode for Carrying Out the Invention

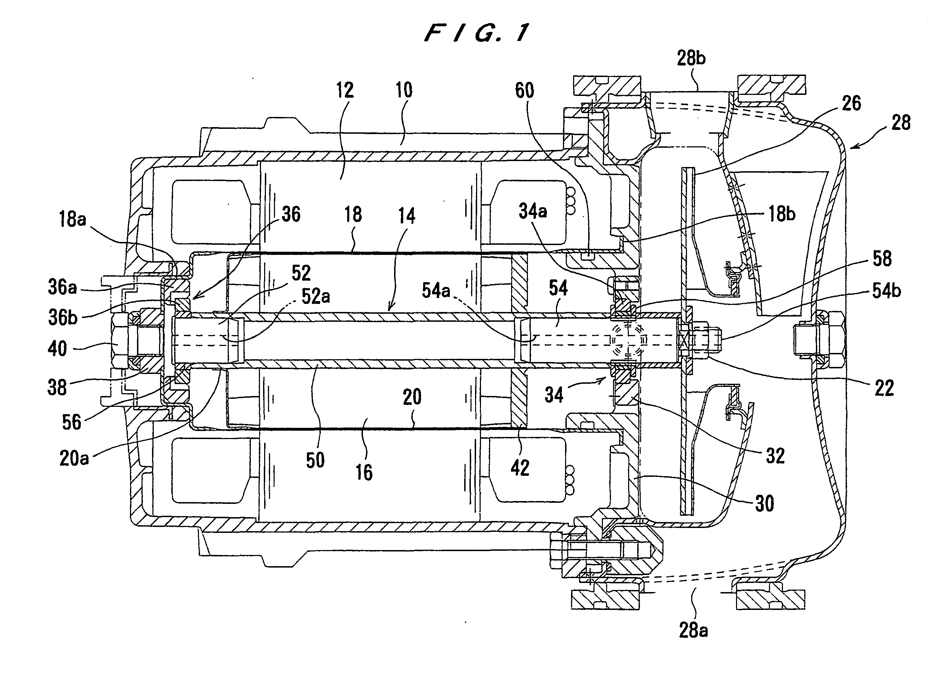

A canned motor and a canned motor pump having such canned motor according to an embodiment of the present invention will be described below with reference to FIG. 1.

As shown in FIG. 1, a canned motor pump incorporates a canned motor which comprises a stator 12 housed in a motor frame 10 and a rotor 16 fixed to a main shaft 14. A substantially cylindrical stator can 18 is provided so as to surround an inner circumferential surface of the stator 12 hermetically, and a substantially cylindrical rotor can 20 is provided so as to surround an outer circumferential surface of the rotor 16 hermetically.

The main shaft 14 comprises a commercial hollow pipe 50 whose both ends are processed by boring, and plug members 52, 54 which are fitted into the both bored ends of the commercial hollow pipe 50. Specifically, the plug member 52 having a through-hole 52a is fitted into the bored end of the hollow pipe 50 at the opposite side of an impeller, and an inner ring 36b constituting a part of a bearing 36 is fixed to the exposed end of the plug member 52 through a sleeve 56. The plug member 54 having a through-hole 54a is fitted into the bored end of the hollow pipe 50 at the impeller side, and a supporting member 58 is attached to the exposed portion of the plug member 54. The supporting member 58 supports an inner ling 34a constituting a part of a bearing 34. Further, the plug member 54 has a projection 54b at its one end, the projection 54b has a male screw on its outer circumferential surface, and a nut 22 is screwed onto the projection 54b to allow an impeller 26 to be fixed to the projection 54b.

The impeller 26 is housed in a pump casing 28 which is formed by assembling pressed products manufactured by press-forming of sheet metal such as stainless steel plate, and has a suction port 28a and a discharge port 28b.

A bracket 30 is disposed between the motor frame 10 and the pressed pump casing 28, and the main shaft 14 is rotatably supported by the bearing 34 held by a bearing bracket 32 attached to the bracket 30, and the bearing 36 provided at the opposite side of the impeller 26.

In this embodiment, because the main shaft 14 comprises a commercial hollow pipe 50 which is additionally machined by boring or the like, it is not necessary to drill the main shaft 14 using a drill or the like. Therefore, the manufacturing process is facilitated, and the man-hour required for working is reduced. Further, the plug members 52 and 54 allow the hollow main shaft 14 to be sufficiently rigid enough to support the inner rings 34a, 36b of the bearings 34, 36, and the projection 54b of the plug member 54 allows the impeller 26 to be attached to the hollow main shaft 14.

Further, the stator can 18 is processed by deep-drawing into a cylindrical receptacle shape such that the stator can 18 has a smaller-diameter portion 18a at one end thereof, and further processed by bulging such that the stator can 18 has a flange 18b at the other open end thereof. The smaller-diameter portion 18a of the stator can 18 is fixedly held between the inner circumferential surface of the motor frame 10 and an outer ring 36a of the bearing 36, and the flange 18b formed at the other open end of the stator can 18 is fixedly held between the end surface of the stator 12 and the bracket 30. Furthermore, an O-ring 60 is interposed between the inner circumferential surface of the stator can 18 and the bracket 30 to keep a hermetically sealed condition in the stator 12.

Therefore, the stator can 18 is fixed without welding, and the hermetically sealed condition in the stator 12 can be kept by the O-ring 60, instead of welding used in the conventional process. By providing the flange 18b on the stator can 18 , the stator can 18 has an increased rigidity enough to prevent the stator can 18 from being deformed toward the inside of the stator 12 due to an internal pump pressure.

The rotor can 20 has a smaller-diameter portion 20a at one end thereof. A rotor side plate 42 is disposed only at one open end of the rotor can 20 located at an impeller side, and welded and fixed to the outer circumferential surface of the main shaft 14. The smaller-diameter portion 20a of the rotor can 20 is welded to the outer circumferential surface of the main shaft 14, and the open end of the rotor can 20 is welded to the rotor side plate 42, thus fixing the rotor can 20 at a predetermined location.

Therefore, one of the rotor side plates 42 which have been heretofore required can be eliminated to thus reduce the number of welding processes and improve the hermetically sealed condition of the rotor 16. Specifically, conventionally, the pair of the rotor side plates 42 has been disposed at the both ends of the rotor 16, and the rotor side plates 42 have been welded to the outer circumferential surface of the main shaft 14 and the both ends of the stator can 20, respectively.

However, according to the present embodiment, by eliminating one of the rotor side plates, the welding process for one rotor side plate is not necessary. More specifically, even though the welding process of the main shaft 14 and the rotor can 20 is necessary at the smaller-diameter portion 20a, the welding process of the rotor can 20 and one of the rotor side plates can be eliminated.

According to this canned motor pump, when the main shaft 14 and the impeller 26 are integrally rotated by the rotation of the rotor 16, a liquid to be handled by the pump is drawn from the suction port 28a into the pressed pump casing 28, and then is pressurized by the impeller 26 and discharged from the discharge port 28b to the outside of the pump. At the same time, the pressurized liquid discharged from the impeller 26 flows through a gap between the stator can 18 and the rotor can 20 to cool the motor, and is then returned to the suction side of the pump through the through-hole 52a of the plug member 52, the interior of the hollow pipe 50, and the through-hole 54a of the plug member 54.

As described above, the present invention can provide a canned motor which can be manufactured more easily to reduce man-hour for working and lower a manufacturing cost without deteriorating its performance, and a canned motor pump having such canned motor.

### Industrial Applicability

The present invention is utilized in a canned motor and a canned motor pump.

## Claims

1. A canned motor comprising:
a stator (12);
a rotor (16) provided in said stator (12); and
a main shaft (14) for supporting said rotor (16), said main shaft comprising:
a hollow pipe (50); and being **CHARACTERISED BY**
plug members (52, 54) fitted into both ends of said hollow pipe (50), said plug members having respective through-holes (52a, 54a).

2. A canned motor pump comprising:
a canned motor according to claim 1;
a pump casing (28) connected to one end of said canned motor; and
an impeller (26) housed in said pump casing and supported by said main shaft (14) of said canned motor.

## Patentansprüche

1. Ein Spaltrohrmotor, der Folgendes aufweist:
einen Stator (12);
einen Rotor (16), vorgesehen in dem Stator (12); und
eine Hauptwelle (14) zum Tragen des Rotors (16), wobei die Hauptwelle Folgendes aufweist:
ein hohles Rohr (50); und **dadurch gekennzeichnet, dass** Verschlusselemente (52, 54) an beiden Enden des hohlen Rohrs (50) eingepasst sind, wobei die Verschlusselemente jeweilige Durchgangslöcher (52a, 54a) besitzen.

2. Eine Spaltrohrmotorpumpe, die Folgendes aufweist:
einen Spaltrohrmotor gemäß Anspruch 1;
ein Pumpengehäuse (28) verbunden mit einem Ende des Spaltrohrmotors; und
ein Lauf- bzw. Flügelrad (26) aufgenommen in dem Pumpengehäuse und getragen durch die Hauptwelle 14 des Spaltrohrmotors.

## Revendications

1. Moteur à stator chemisé comprenant :
un stator (12) ;
un rotor (16) disposé dans ledit stator (12) ; et
un arbre principal (14) destiné à supporter ledit rotor (16), ledit arbre principal comprenant :
un tuyau creux (50) ; et étant **caractérisé par**
des organes formant bouchon (52, 54) ajustés dans les deux extrémités dudit tuyau creux (50), lesdits organes formant bouchon comportant des trous traversants respectifs (52a, 54a).

2. Electro-pompe à stator chemisé comprenant :
un moteur à stator chemisé selon la revendication 1 ;
un corps de pompe (28) relié à une extrémité du moteur à stator chemisé ; et
un impulseur (26) logé dans ledit corps de pompe et supportée par ledit arbre principal (14) dudit moteur à stator chemisé.
